# EUROPÄISCHE PATENTSCHRIFT

(11) **EP 3 353 020 B1**
(45) Veröffentlichungstag und Bekanntmachung des Hinweises auf die Patenterteilung: **14.04.2021**
(21) Anmeldenummer: 16760716.7
(22) Anmeldetag: 06.09.2016
(51) Int. Cl.: B60T 7/04, B60T 8/172, B60T 8/24, B60T 8/74

(54) **VERFAHREN ZUM ABBREMSEN EINES NUTZFAHRZEUGS**
METHOD FOR BRAKING A UTILITY VEHICLE
PROCÉDÉ POUR LE FREINAGE D'UN CAMION

(30) Priorität: 21.09.2015 DE 102015115850
(43) Veröffentlichungstag der Anmeldung: 01.08.2018
(73) Patentinhaber: KNORR-BREMSE Systeme für Nutzfahrzeuge GmbH, 80809 München (DE)
(72) Erfinder: SKRABAK, Attila, 1224 Budapest (HU); SÖNFELD, Jozsef, 1037 Budapest (HU); SIMON, Laszlo, 1116 Budapest (HU); JUHASZ, György, 1115 Budapest (HU); BOZSVARI, Gabor, 1119 Budapest (HU); SZALAY, Zsolt, 1117 Budapest (HU); CSERHALMI, György, 1125 Budapest (HU); BAKSA, Istvan, 8792 Zalaveg (HU)
(86) Internationale Anmeldenummer: PCT/EP2016/070905
(87) Internationale Veröffentlichungsnummer: WO 2017/050553

(56) Entgegenhaltungen:
- EP-A1- 2 749 464
- DE-A1-102013 203 189

## Beschreibung

Die Erfindung geht aus von einer Vorrichtung oder einem Verfahren nach Gattung der unabhängigen Ansprüche. Gegenstand der vorliegenden Erfindung ist auch ein Computerprogramm.

Bei einem Lastkraftwagen wird eine Bremskraft in Abhängigkeit von einem Pedaldruck auf ein Bremspedal des Lastkraftwagens bereitgestellt.

Die Druckschrift EP 2 749 464 A zeigt ein hydraulisches Bremsdruck-Steuerungssystem für ein Fahrzeug.

Die Drucksschrift DE 10 2013 203189 A zeigt ein Verfahren zur Bestimmung einer Druck-Volumen-Kennlinie einer Radbremse.

Vor diesem Hintergrund werden mit dem hier vorgestellten Ansatz ein verbessertes Verfahren zum Abbremsen eines Nutzfahrzeugs, weiterhin ein Steuergerät, das dieses verbesserte Verfahren verwendet, sowie schließlich ein entsprechendes Computerprogramm gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Bei einem einfachen Bremssystem drückt ein Fahrer eines Nutzfahrzeugs stärker auf ein Bremspedal, wenn er merkt, dass das Fahrzeug nicht stark genug gebremst wird. Beispielsweise wird der Fahrer bei einer Bergabfahrt stärker auf das Bremspedal drücken, als bei einer Bergauffahrt, um die gleiche Bremswirkung zu erreichen.

Die Kraft oder ein Pedalweg, mit welcher der Fahrer initial auf das Bremspedal drückt, drückt dabei aus, wie stark der Fahrer bremsen will. Diese Kraft wird in einer Pedalstellung des Bremspedals abgebildet.

Durch den hier vorgestellten Ansatz wird eine an den Bremsen bereitgestellte Bremskraft abhängig von Fahrzeugfaktoren und Umweltfaktoren geregelt. Dadurch kann der Fahrer in jeder Situation mit der gleichen Kraft auf das Pedal drücken und damit die gleiche Abbremsung am Fahrzeug hervorrufen.

Es wird ein Verfahren zum Abbremsen eines Nutzfahrzeugs vorgestellt, wobei das Verfahren die folgenden Schritte aufweist:
Bestimmen eines Zielverzögerungswerts für das Nutzfahrzeug unter Verwendung einer Pedalinformation, wobei die Pedalinformation eine Pedalstellung eines Bremspedals des Nutzfahrzeugs repräsentiert. Um den Zielverzögerungswert bestimmen zu können, sollten alle bzw. die meisten Kräfte die das Fahrzeug neben den Bremsen verzögern oder beschleunigen wie Fahrbahnneigung, Roll- und Luftwiderstand und Radkräfte aus dem Antriebsstrang in Betracht gezogen werden;
Ermitteln eines Offsetwerts unter Verwendung einer Verzögerungsinformation und des Zielverzögerungswerts, wobei die Verzögerungsinformation eine aktuelle Geschwindigkeitsänderung des Nutzfahrzeugs repräsentiert; und
Bereitstellens eines Bremssignals für ein Bremssystem des Nutzfahrzeugs unter Verwendung des Offsetwerts und der Pedalinformation, um das Nutzfahrzeug abzubremsen.

Unter einem Nutzfahrzeug kann ein Lastkraftwagen oder eine Sattelzugmaschine verstanden werden. Eine Pedalinformation bildet eine Druckkraft auf das Bremspedal oder den Pedalweg ab. Eine Verzögerungsinformation kann eine Geschwindigkeitsdifferenz pro Zeiteinheit beziehungsweise eine Beschleunigung des Nutzfahrzeugs sein. Ein Bremssignal kann ein Steuersignal zum Ansteuern des Bremssystems des Nutzfahrzeugs sein.

Der Zielverzögerungswert kann ferner unter Verwendung eines Geschwindigkeitswerts bestimmt werden, wobei der Geschwindigkeitswert eine aktuelle Geschwindigkeit des Nutzfahrzeugs repräsentiert. Von der Geschwindigkeit ist der Roll- und Luftwiderstand des Nutzfahrzeugs abhängig. Der Roll- und Luftwiderstand bremst das Nutzfahrzeug.

Der Zielverzögerungswert kann ferner unter Verwendung eines Neigungswerts bestimmt werden, wobei der Neigungswert einen aktuellen Neigungswinkel einer Fahrbahn unter dem Nutzfahrzeug repräsentiert. An einem Gefälle wird das Nutzfahrzeug ohne Bremsen schneller. An einer Steigung wird das Nutzfahrzeug ohne zusätzliches Drehmoment langsamer.

Der Zielverzögerungswert kann ferner unter Verwendung eines Antriebskennwerts bestimmt werden, wobei der Antriebskennwert ein aktuell durch einen Antriebsstrang des Nutzfahrzeugs übertragenes Drehmoment repräsentiert. Das Nutzfahrzeug kann über den Antriebsstrang gebremst werden, um Reibungsbremsen des Nutzfahrzeugs zu schonen. Das Nutzfahrzeug kann beispielsweise durch ein Energierückgewinnungssystem, einen Retarder, einen geschobenen Motor und/oder eine Ventilsteuerung des Motors gebremst werden.

Der Offsetwert kann vergrößert werden, wenn die Geschwindigkeitsänderung kleiner als der Zielverzögerungswert ist. Insbesondere kann der Offsetwert so lange vergrößert werden, bis die Geschwindigkeitsänderung im Wesentlichen dem Zielverzögerungswert entspricht. Der Offsetwert kann verkleinert werden, wenn die Geschwindigkeitsänderung größer als der Zielverzögerungswert ist. Insbesondere kann der Offsetwert so lange verkleinert werden, bis die Geschwindigkeitsänderung im Wesentlichen dem Zielverzögerungswert entspricht. Durch den Offsetwert kann ein Gleichgewicht eingestellt werden.

Der Offsetwert kann schrittweise geändert werden. Eine Schrittweite einer Änderung des Offsetwerts kann proportional zu einer Änderung einer Differenz zwischen der Geschwindigkeitsänderung und dem Zielverzögerungswert angepasst werden. Durch eine schrittweise Änderung kann die Bremskraft mit geringer Rechenleistung angepasst werden. Eine Änderung des Offsetwerts kann ansprechend auf eine aktivierte Fahrerassistenzfunktion des Nutzfahrzeugs ausgesetzt werden. Fahrerassistenzfunktionen können beispielsweise ein Antiblockiersystem oder ein Stabilitätssystem sein. Bei Aktivität der Assistenzsysteme herrschen meist keine stabilen Verhältnisse, um den Zielverzögerungswert aus den Radgeschwindigkeitssignalen berechnen zu können.

Ein nachfolgender Schritt des Ermittelns kann nach Ablauf einer vorbestimmten Wartezeit ausgeführt werden. Durch eine Wartezeit können stabile Verhältnisse erreicht werden.

Dieses Verfahren kann beispielsweise in Software oder Hardware oder in einer Mischform aus Software und Hardware beispielsweise in einem Steuergerät implementiert sein.

Der hier vorgestellte Ansatz schafft ferner ein Steuergerät, das ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Ausführungsbeispiele der Erfindung sind in den Zeichnungen dargestellt und in der nachfolgenden Beschreibung näher erläutert. Es zeigt:
- Fig. 1: eine Darstellung eines Nutzfahrzeugs mit einem Steuergerät gemäß einem Ausführungsbeispiel;
- Fig. 2: ein Blockschaltbild eines Steuergeräts gemäß einem Ausführungsbeispiel; und
- Fig. 3: ein Ablaufdiagramm eines Verfahrens zum Abbremsen eines Nutzfahrzeugs gemäß einem Ausführungsbeispiel.

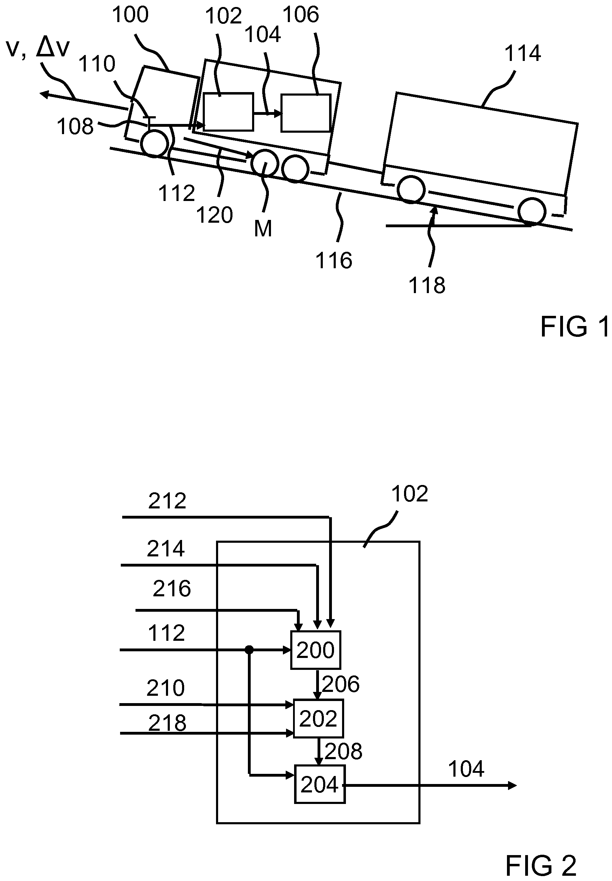

**Fig. 1** zeigt eine Darstellung eines Nutzfahrzeugs 100 mit einem Steuergerät 102 gemäß einem Ausführungsbeispiel. Das Steuergerät 102 ist dazu ausgebildet, ein Bremssignal 104 für ein Bremssystem 106 des Nutzfahrzeugs 100 in Abhängigkeit von einer, eine Pedalstellung 108 eines Bremspedals 110 repräsentierenden Pedalinformation 112 bereitzustellen.

Das Nutzfahrzeug 100 ist hierein Lastkraftwagen 100 beziehungsweise LKW 100 mit einem Anhänger 114. Zusammen bilden der LKW 100 und der Anhänger 114 einen Lastzug. Je nach Fahrsituation sind unterschiedliche Kräfte an den Bremsen des Lastzugs erforderlich, um den Lastzug in gleicher Weise abzubremsen.

Hier weist eine Fahrbahn 116 unter dem Lastzug eine Steigung 118 auf. Der Lastzug fährt bergauf. Aufgrund der Steigung 118 muss gegenüber ebener Fahrbahn 116 über einen Antriebsstrang 120 des LKW 100 zusätzliches Drehmoment M bereitgestellt werden, um eine Geschwindigkeit v des Lastzugs konstant zu halten. Umgekehrt wird aufgrund der Steigung 118 weniger Bremskraft benötigt, als auf ebener Fahrbahn 116, um eine gewünschte Geschwindigkeitsänderung Δv hervorzurufen. Wenn der Lastzug ein Gefälle 118 bergab fährt, kehren sich die Verhältnisse um. Dann kann durch den Antriebsstrang 120 ein Gegenmoment M bereitgestellt werden, um die Geschwindigkeit konstant zu halten. Das Gegenmoment M kann beispielsweise durch einen Retarder oder eine Motorbremse oder einen Motor im Schubbetrieb bereitgestellt werden. Bergab wird gegenüber der ebenen Fahrbahn 116 mehr Bremskraft benötigt, um die gewünschte Geschwindigkeitsänderung Δv hervorzurufen.

Der LKW 100 wird ebenso durch einen Windwiderstand und einem Rollwiderstand gebremst. Dabei ist der Windwiderstand im Wesentlichen abhängig von der Geschwindigkeit v. Der Rollwiderstand ist im Wesentlichen abhängig von einem Gewicht des Lastzugs und einem Zustand der Reifen des Lastzugs.

Durch den hier vorgestellten Ansatz wird unabhängig von äußeren und inneren Einflüssen bei einer bestimmten Pedalstellung 108 des Bremspedals 110 eine bestimmte Abbremsung des Lastzugs hervorgerufen. Als Abbremsung ist hierbei die Geschwindigkeitsänderung Δv, verursacht durch die Bremsen, beziehungsweise die Änderung der Geschwindigkeitsänderung Δv wegen einer Aktivität der Bremsen zu verstehen. Dazu wird in dem Steuergerät 102 das Bremssignal 104 an die äußeren und inneren Einflüsse angepasst.

Es wird eine Lastzugbremssteuerung vorgestellt. Der hier vorgestellte Ansatz stellt eine genaue Verzögerung und ein gutes Pedalgefühl für den Fahrer eines Lastzugs bereit. Dabei wird ein Verzögerungsfehler des Fahrzeugs unter Verwendung eines Verzögerungsoffsets kompensiert. Der Verzögerungsfehler ist eine Differenz zwischen einer Zielverzögerung und einer tatsächlichen Verzögerung.

Die Zielverzögerung kann berechnet werden. Da eine Anforderung am Bremspedal 110 eine Abbremsung des Lastzugs repräsentiert, wird ein Zielverzögerungswert ermittelt. Die durch die Anforderung 108 am Bremspedal 110 hervorgerufene Bremskraft wird durch Kräfte im Antriebsstrang 120, wie beispielsweise einen Retarder oder den Motor im Schubbetrieb, durch eine Straßenneigung an einer Steigung 118 und den Rollwiderstand sowie den Luftwiderstand verstärkt. Anders als beim Pedalwunsch, bei einer XBR-Anforderung ("External Brake Request" - Externe Bremsanforderung) ist die Zielverzögerung gleich der XBR-Anforderung, weil XBR-Anforderung als gewünschte Geschwindigkeitsänderung Δv interpretiert wird.

Damit kann ein Eingriffssignal berechnet werden. Wenn eine gemessene Verzögerung des Fahrzeugs 100 geringer als die Zielverzögerung ist, wird der Offset vergrößert, bis die gemessene Verzögerung die Referenzverzögerung erreicht. Wenn die gemessene Verzögerung größer als die Zielverzögerung ist, wird der Offset verringert. Wenn der Verzögerungsfehler zunimmt, werden Schritte des Offsets größer, als bei abnehmendem Verzögerungsfehler. Die verschiedenen Schritte können über Bruchteile des Verzögerungsfehlers angepasst werden. Die Bruchteile können über Parameter voreingestellt werden.

Der Offset der Lastzugbremssteuerung wird nicht kontinuierlich verändert. Nach jedem Eingriff wird eine Wartezeit eingehalten, um ein Ergebnis des Eingriffs zu erhalten. Ein Eingriffszeitpunkt kann über Parameter voreingestellt werden.

Der Offset ist zwischen absoluten Abbremsugsgrenzen und von einer Pedalstellung abhängigen Grenzen begrenzt, z. B. auf plusminus 2,5 m/ms und kleiner als ein vorbestimmter Bruchteil des Verzögerunswunsches vom Fahrer. Die Lastzugbremssteuerung wird bei ABS Aktivität unterbunden, da es keinen Sinn macht, die Verzögerung zu steuern, wenn das ABS aktiv ist. Die Lastzugbremssteuerung wird für eine Toleranzzeit, z. B. 500 Millisekunden nach dem letzten ABS Eingriff unterbunden, um stabile Eingangssignale zu erhalten. Die Lastzugbremssteuerung wird während Schaltvorgängen unterbunden, da die Verzögerung sich dabei speziell bei Retarderüberlagerung stark ändern kann. Die Lastzugbremssteuerung wird für eine vordefinierte Wartezeit nach einem Schaltvorgang unterbunden, um den stabilen Zustand zu erreichen.

**Fig. 2** zeigt ein Blockschaltbild eines Steuergeräts 102 zum Abbremsen eines Nutzfahrzeugs gemäß einem Ausführungsbeispiel. Das Steuergerät 102 entspricht beispielsweise dem Steuergerät in Fig. 1. Das Steuergerät 102 weist eine Einrichtung 200 zum Bestimmen, eine Einrichtung 202 zum Ermitteln und eine Einrichtung 204 zum Bereitstellen auf. Die Einrichtung 200 zum Bestimmen ist dazu ausgebildet, einen Zielverzögerungswert 206 für das Nutzfahrzeug unter Verwendung der Pedalinformation 112 zu bestimmen. Wie in Fig. 1 repräsentiert die Pedalinformation 112 eine Pedalstellung eines Bremspedals des Nutzfahrzeugs. Die Pedalinformation 112 bildet einen Abbremsungswunsch eines Fahrers des Nutzfahrzeugs ab. Die Einrichtung 202 zum Ermitteln ist dazu ausgebildet, einen Offsetwert 208 unter Verwendung einer Verzögerungsinformation 210 und des Zielverzögerungswerts 206 zu ermitteln. Die Verzögerungsinformation 210 repräsentiert die aktuelle Geschwindigkeitsänderung und damit die tatsächliche Verzögerung, wie sie durch äußere und innere Einflüsse am Nutzfahrzeug besteht. Die Einrichtung 204 zum Bereitstellen ist dazu ausgebildet, das Bremssignal 104 für das Bremssystem des Nutzfahrzeugs unter Verwendung des Offsetwerts 208 und der Pedalinformation 112 bereitzustellen, um das Nutzfahrzeug abzubremsen. In der Einrichtung 204 zum Bereitstellen werden der Offsetwert 208 und die Pedalinformation 112 zusammengeführt.

In einem Ausführungsbeispiel wird der Zielverzögerungswert 206 ferner unter Verwendung eines Geschwindigkeitswerts 212 bestimmt. Der Geschwindigkeitswert 212 repräsentiert eine aktuelle Geschwindigkeit des Nutzfahrzeugs. Der Rollwiderstand und der Windwiderstand des Nutzfahrzeugs sind stark abhängig von der Geschwindigkeit.

In einem Ausführungsbeispiel wird der Zielverzögerungswert 206 ferner unter Verwendung eines Neigungswerts 214 bestimmt. Der Neigungswert 214 repräsentiert einen aktuellen Neigungswinkel einer Fahrbahn unter dem Nutzfahrzeug. Die Steigung beeinflusst über die Hangabtriebskraft stark das Fahrverhalten des Nutzfahrzeugs.

In einem Ausführungsbeispiel wird der Zielverzögerungswert 206 ferner unter Verwendung eines Antriebskennwerts 216 bestimmt. Der Antriebskennwert 216 repräsentiert das aktuell durch den Antriebsstrang des Nutzfahrzeugs übertragene Drehmoment. Das Drehmoment beeinflusst stark das Fahrverhalten des Nutzfahrzeugs.

Der Offsetwert 208 wird in einem Ausführungsbeispiel in Schritten vergrößert oder verkleinert. Ebenso kann der Offsetwert 208 stufenlos vergrößert oder verkleinert. Dabei wird ein Unterschied zwischen dem tatsächlichen Verzögerungswert 210 und dem Zielverzögerungswert 206 betrachtet. Wenn der Unterschied ansteigt, wird der Offsetwert 208 stärker geändert, als wenn der Unterschied fällt. Wenn der Unterschied kleiner als ein Toleranzwert ist, wird der Offsetwert 208 nicht mehr verändert. Mit anderen Worten bleibt der Offsetwert 208 gleich, solange der kein Unterschied zwischen dem tatsächlichen Verzögerungswert 210 und dem Zielverzögerungswert 206 existiert.

In einem Ausführungsbeispiel wird die Veränderung des Offsetwerts 208 ausgesetzt, wenn eine Fahrerassistenzfunktion, wie beispielsweise ein Antiblockiersystem oder ein elektronisches Stabilitätssystem des Nutzfahrzeugs aktiv ist. Dazu wird ein Assistenzsignal 218 eingelesen, wenn die Fahrerassistenzfunktion aktiv ist.

In einem Ausführungsbeispiel wird nach einer Änderung des Offsetwerts 208 eine Wartezeit abgewartet, damit sich am Nutzfahrzeug stabile Verhältnisse einstellen können.

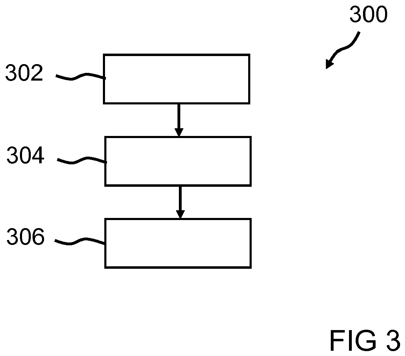

**Fig. 3** zeigt ein Ablaufdiagramm eines Verfahrens 300 zum Abbremsen eines Nutzfahrzeugs gemäß einem Ausführungsbeispiel. Das Verfahren 300 weist einen Schritt 302 des Bestimmens, einen Schritt 304 des Ermittelns und einen Schritt 306 des Bereitstellens auf. Das Verfahren 300 kann beispielsweise auf einem Steuergerät, wie es in den Figuren 1 und 2 dargestellt ist ausgeführt werden. Im Schritt 302 des Bestimmens wird ein Zielverzögerungswert für das Nutzfahrzeug unter Verwendung einer Pedalinformation bestimmt. Im Schritt 304 des Ermittelns wird ein Offsetwert unter Verwendung einer Verzögerungsinformation und des Zielverzögerungswerts ermittelt. Im Schritt 306 des Bereitstellens wird ein Bremssignal für ein Bremssystem des Nutzfahrzeugs unter Verwendung des Offsetwerts und der Pedalinformation bereitgestellt.

### BEZUGSZEICHENLISTE

- 100: Nutzfahrzeug, LKW
- 102: Steuergerät
- 104: Bremssignal
- 106: Bremssystem
- 108: Pedalstellung
- 110: Bremspedal
- 112: Pedalinformation
- 114: Anhänger
- 116: Fahrbahn
- 118: Steigung
- 120: Antriebsstrang
- M: Drehmoment
- v: Geschwindigkeit
- Δv: Geschwindigkeitsänderung
- 200: Einrichtung zum Bestimmen
- 202: Einrichtung zum Ermitteln
- 204: Einrichtung zum Bereitstellen
- 206: Zielverzögerungswert
- 208: Offsetwert
- 210: Verzögerungsinformation
- 212: Geschwindigkeitswert
- 214: Neigungswert
- 216: Antriebskennwert
- 218: Assistenzsignal
- 300: Verfahren zum Abbremsen
- 302: Schritt des Bestimmens
- 304: Schritt des Ermittelns
- 306: Schritt des Bereitstellens

## Patentansprüche

1. Verfahren (300) zum Abbremsen eines Nutzfahrzeugs (100),
**dadurch gekennzeichnet, dass**
- in einem Schritt (302) des Bestimmens ein Zielverzögerungswert (206) für das Nutzfahrzeug (100) unter Verwendung einer Pedalinformation (112) bestimmt wird, wobei die Pedalinformation (112) eine Pedalstellung (108) eines Bremspedals (110) des Nutzfahrzeugs (100) repräsentiert;
- in einem Schritt (304) des Ermittelns ein Offsetwert (208) unter Verwendung einer Verzögerungsinformation (210) und des Zielverzögerungswerts (206) ermittelt wird, wobei die Verzögerungsinformation (210) eine aktuelle Geschwindigkeitsänderung (Δv) des Nutzfahrzeugs (100) repräsentiert; und
- in einem Schritt (306) des Bereitstellens ein Bremssignal (104) für ein Bremssystem (106) des Nutzfahrzeugs (100) unter Verwendung des Offsetwerts (208) und der Pedalinformation (112) bereitgestellt wird, um das Nutzfahrzeug (100) abzubremsen.

2. Verfahren (300) gemäß Anspruch 1,
**dadurch gekennzeichnet, dass**
im Schritt (302) des Bestimmens der Zielverzögerungswert (206) ferner unter Verwendung eines Geschwindigkeitswerts (212) bestimmt wird, wobei der Geschwindigkeitswert (212) eine aktuelle Geschwindigkeit (v) des Nutzfahrzeugs (100) repräsentiert.

3. Verfahren (100) gemäß einem der vorhergehenden Ansprüche,
**dadurch gekennzeichnet, dass**
im Schritt (302) des Bestimmens der Zielverzögerungswert (206) ferner unter Verwendung eines Neigungswerts (214) bestimmt wird, wobei der Neigungswert (214) einen aktuellen Neigungswinkel (118) einer Fahrbahn (116) unter dem Nutzfahrzeug (100) repräsentiert.

4. Verfahren (100) gemäß einem der vorhergehenden Ansprüche,
**dadurch gekennzeichnet, dass**
im Schritt (302) des Bestimmens der Zielverzögerungswert (206) ferner unter Verwendung eines Antriebskennwerts (216) bestimmt wird, wobei der Antriebskennwert (216) ein aktuell durch einen Antriebsstrang (120) des Nutzfahrzeugs (100) übertragenes Drehmoment (M) repräsentiert.

5. Verfahren (300) gemäß einem der vorhergehenden Ansprüche,
**dadurch gekennzeichnet, dass**
im Schritt (304) des Ermitteins der Offsetwert (208) vergrößert wird, wenn die aktuelle Geschwindigkeitsänderung (Δv) kleiner als der Zielverzögerungswert (206) ist, insbesondere wobei der Offsetwert (208) so lange vergrößert wird, bis die Geschwindigkeitsänderung (Δv) im Wesentlichen dem Zielverzögerungswert (206) entspricht.

6. Verfahren (300) gemäß einem der vorhergehenden Ansprüche,
**dadurch gekennzeichnet, dass**
im Schritt (304) des Ermittelns der Offsetwert (208) verkleinert wird, wenn die Geschwindigkeitsänderung (Δv) größer als der Zielverzögerungswert (206) ist, insbesondere wobei der Offsetwert (208) so lange verkleinert wird, bis die Geschwindigkeitsänderung (Δv) im Wesentlichen dem Zielverzögerungswert (206) entspricht.

7. Verfahren (300) gemäß einem der Ansprüche 5 bis 6,
**dadurch gekennzeichnet, dass**
im Schritt (304) des Ermittelns der Offsetwert (208) schrittweise geändert wird, wobei eine Schrittweite einer Änderung des Offsetwerts (208) proportional zu einer Änderung einer Differenz zwischen der Geschwindigkeitsänderung (Δv) und dem Zielverzögerungswert (206) angepasst wird.

8. Verfahren (300) gemäß einem der vorhergehenden Ansprüche,
**dadurch gekennzeichnet, dass**
ein nachfolgender Schritt (304) des Ermittelns nach Ablauf einer vorbestimmten Wartezeit ausgeführt wird.

9. Verfahren (300) gemäß einem der vorhergehenden Ansprüche,
**dadurch gekennzeichnet, dass**
im Schritt (306) des Bereitstellens ansprechend auf eine, aktivierte Fahrerassistenzfunktion des Nutzfahrzeugs (100) die Verwendung des Offsetwerts (208) ausgesetzt wird.

10. Steuergerät (102), das eingerichtet ist, das Verfahren (300) gemäß einem der vorangegangenen Ansprüche auszuführen.

11. Computerprogramm, das dazu eingerichtet ist, das Verfahren (300) gemäß einem der vorangegangenen Ansprüche 1 bis 9 auszuführen, wenn das Computerprogramm auf einem Computer oder einer Vorrichtung ausgeführt wird.

## Claims

1. Method (300) for decelerating a utility vehicle (100),
**characterised in that**
- in a determination step (302) a target deceleration value (206) for the utility vehicle (100) is determined using pedal information (112), wherein the pedal information (112) represents a pedal position (108) of a brake pedal (110) of the utility vehicle (100);
- in an acquisition step (304) an offset value (208) is acquired using deceleration information (210) and the target deceleration value (206), wherein the deceleration information (210) represents a current change in speed (Δv) of the utility vehicle (100); and
- in a provision step (306) a brake signal (104) is provided for a brake system (106) of the utility vehicle (100) using the offset value (208) and the pedal information (112), in order to decelerate the utility vehicle (100).

2. Method (300) according to claim 1,
**characterised in that**
in the determination step (302) the target deceleration value (206) is also determined using a speed value (212), wherein the speed value (212) represents a current speed (v) of the utility vehicle (100).

3. Method (100) according to one of the preceding claims,
**characterised in that**
in the determination step (302) the target deceleration value (206) is also determined using an inclination value (214), wherein the inclination value (214) represents a current angle of inclination (118) of a roadway (116) under the utility vehicle (100).

4. Method (100) according to one of the preceding claims,
**characterised in that**
in the determination step (302) the target deceleration value (206) is also determined using a drive parameter (216), wherein the drive parameter (216) represents a torque (M) which is currently transmitted by a drive train (120) of the utility vehicle (100).

5. Method (300) according to one of the preceding claims,
**characterised in that**
in the acquisition step (304) the offset value (208) is increased if the change in speed (Δv) is smaller than the target deceleration value (206), in particular wherein the offset value (208) is increased until the change in speed (Δv) corresponds essentially to the target deceleration value (206).

6. Method (300) according to one of the preceding claims,
**characterised in that**
in the acquisition step (304) the offset value (208) is decreased if the change in speed (Δv) is greater than the target deceleration value (206), in particular wherein the offset value (208) is decreased until the change in speed (Δv) corresponds essentially to the target deceleration value (206).

7. Method (300) according to one of the preceding claims,
**characterised in that**
in the acquisition step (304) the offset value (208) is changed incrementally, wherein an increment of a change in the offset value (208) is adapted in proportion to a change in the difference between the change in speed (Δv) and the target deceleration value (206).

8. Method (300) according to one of the preceding claims,
**characterised in that**
a subsequent acquisition step (304) is executed after the expiry of a predetermined waiting time.

9. Method (300) according to one of the preceding claims,
**characterised in that**
in the provision step (306) the use of the offset value (208) is suspended in response to an activated driver assistance function of the utility vehicle (100).

10. Control unit (102) which is configured to execute the method (300) according to one of the preceding claims.

11. Computer program which is configured to execute the method (300) according to one of the preceding claims 1 to 9 if the computer program is executed on a computer or an apparatus.

## Revendications

1. Procédé (300) de freinage d'un véhicule (100) utilitaire, **caractérisé en ce que**
- dans un stade (302) de la définition, on définit une valeur (206) cible de décélération du véhicule (100) utilitaire en utilisant une information (112) de pédale, l'information (112) de pédale représentant une position (108) d'une pédale (110) de frein du véhicule (100) utilitaire ;
- dans un stade (304) de la définition, on détermine une valeur (208) d'offset en utilisant une information (210) de décélération et la valeur (206) cible de décélération, l'information (210) de décélération représentant une variation (**Δv**) en cours de la vitesse du véhicule (100) utilitaire ;
- dans un stade (306) de la mise à disposition, on met un signal (104) de frein à disposition d'un système (106) de frein du véhicule (100) utilitaire, en utilisant la valeur (208) d'offset et l'information (112) de pédale, afin de freiner le véhicule (100) utilitaire.

2. Procédé (300) suivant la revendication 1,
**caractérisé en ce que**
dans le stade (302) de la définition, on définit la valeur (206) cible de décélération, en outre, en utilisant une valeur (212) de vitesse, la valeur (212) de vitesse représentant une vitesse (v) en cours du véhicule (100) utilitaire.

3. Procédé (100) suivant l'une des revendications précédentes, **caractérisé en ce que**
dans le stade (302) de la définition, on définit la valeur (206) de cible de décélération, en outre, en utilisant une valeur (214) d'inclinaison, la valeur (214) d'inclinaison représentant un angle (118) d'inclinaison en cours d'une voie (116) de circulation sous le véhicule (100) utilitaire.

4. Procédé (100) suivant l'une des revendications précédentes, **caractérisé en ce que**
dans le stade (302) de la définition, on définit la valeur (206) cible de décélération, en outre, en utilisant une valeur (216) caractéristique d'entraînement, la valeur (216)
caractéristique d'entraînement représentant un couple (M) transmis en cours par une chaîne (120) cinématique du véhicule (100) utilitaire.

5. Procédé (300) suivant l'une des revendications précédentes, **caractérisé en ce que** dans le stade (304) de la détermination, on augmente la valeur (208) d'offset, si la variation (**Δv**) en cours de la vitesse est plus petite que la valeur (206) cible de décélération, dans lequel notamment, on augmente la valeur (208) d'offset, jusqu'à ce que la variation (**Δv**) de la vitesse corresponde sensiblement à la valeur (206) cible de décélération.

6. Procédé (300) suivant l'une des revendications précédentes, **caractérisé en ce que**
dans le stade (304) de la détermination, on diminue la valeur (208) d'offset, si la variation (**Δv**) de la vitesse est plus grande que la valeur (206) cible de décélération, notamment dans lequel, on diminue la valeur (208) d'offset, jusqu'à ce que la variation (**Δv**) de vitesse corresponde sensiblement à la valeur (206) cible de décélération.

7. Procédé (300) suivant l'une des revendications 5 à 6,
**caractérisé en ce que**
dans le stade (304) de la détermination, on modifie pas à pas la valeur (208) d'offset, dans lequel on adapte une largeur de pas d'une variation de la valeur (208) d'offset proportionnellement à une variation d'une différence, entre la variation (**Δv**) de vitesse et la valeur (206) cible de décélération.

8. Procédé (300) suivant l'une des revendications précédentes, **caractérisé en ce que**, on effectue un stade (304), venant ensuite, de la définition, après écoulement d'un temps d'attente déterminé à l'avance.

9. Procédé (300) suivant l'une des revendications précédentes,
**caractérisé en ce que**,
dans le stade (306) de la mise à disposition, en réaction à une fonction activée d'assistance à la conduite du véhicule (100) utilitaire, on suspend l'utilisation de la valeur (208) d'offset.

10. Appareil (102) de commande, qui est conçu pour effectuer le procédé (300) suivant l'une des revendications précédentes.

11. Programme d'ordinateur, qui est conçu pour effectuer le procédé (300) suivant l'une des revendications 1 à 9 précédentes, lorsque le programme d'ordinateur est exécuté sur un ordinateur ou sur une installation.
